# EUROPEAN PATENT APPLICATION

(11) **EP 1 054 529 A2**
(43) Date of publication of application: **22.11.2000**
(21) Application number: 00303899.9
(22) Date of filing: 09.05.2000
(51) Int. Cl.: H04L 12/26, H04L 12/24

(54) **Method and apparatus for associating network usage with particular users**

(30) Priority: 20.05.1999 US 315636
(71) Applicant: LUCENT TECHNOLOGIES INC., Murray Hill, New Jersey 07974-0636 (US)
(72) Inventor: Blott, Stephen Michael, Gillette, New Jersey 07901 (US); Breitbart, Yuri, Madison, New Jersey 17940 (US); Martin, Clifford Eric, Martinsville, New Jersey 08836 (US)
(74) Representative: Watts, Christopher Malcolm Kelway, Dr.

(57) **Abstract**

A monitoring node is disposed in a data network for monitoring network traffic. As data packets are received by the monitoring node, the monitoring node associates particular users with the data packet by reference to authentication data stored in the monitoring node. The authentication data is received from network authentication sources, and includes an identification of a user and a network address associated with the identified user. The monitoring node, upon receipt of a data packet, compares the network address in the data packet with the network addresses stored as authentication data in order to associate a particular user with the data packet. The monitoring node may also associate a service associated with the data packet. The monitoring node provides usage data to a database which stores aggregate user usage data. The disclosed technique is advantageous in various network applications such as billing, firewalls, gateways, prepaid services, network policy enforcement, and quality of service guarantees.

## Description

### Field of the Invention

The present invention relates generally to data networks. More particularly, the present invention relates to techniques for associating network usage with particular users.

### Background of the Invention

Historically, the collection of user specific usage data for data networks has not been a priority of network designers. For example, the use of the Internet has traditionally been free to users, with the actual costs being absorbed into the budgets of various research institutions, corporations, and government agencies. As such, although aggregated network usage data has been collected for network monitoring and planning, there has been little need to collect user specific network usage information.

However, as data networks in general, and the Internet in particular, continue to grow and develop, a need is arising for user specific usage information. This need is related to several factors. First, network operators require the ability to recover costs associated with providing network services. The current unlimited usage flat-fee pricing schemes are acting as a hindrance to the provisioning of more innovative and differentiated services. The more familiar model of pricing based on usage, as used in the conventional voice telephony network, would allow service providers to introduce innovative services and to charge accordingly.

Second, the increasing focus on quality of service suggests the need for usage based information. Traditionally, data networks operated under a best-effort service policy such that the data traffic of all network users was given the same priority. Increasingly, however, some users are willing to pay for a guaranteed quality of service. As such, there is a need to be able to differentiate the data traffic of different users.

Third, companies are making a substantial investment in their internal data networks (i.e., intranets) and are seeking ways to more closely monitor the usage of their networks. Such usage information can become the basis for accounting, network planning, and the control of possible abuse of network resources.

One problem with associating usage with users in current data networks is that data packets transmitted across data networks generally do not identify the users who send and receive the data packets. Instead, the data packets identify the address of the machine from which the data packet was sent (the source address) and the address of the machine to which the data packet is addressed (the destination address). In networks operating in accordance with the well known Internet Protocol (IP), these addresses are called IP addresses. IP addresses generally cannot be matched to particular users for various reasons. One such reason is that IP addresses are often dynamically assigned, such that the IP address of a particular machine may change each time the machine registers with the data network. Another problem is that, even if a machine has a fixed IP address, at any given time multiple users may be using that same machine to access the data network.

There have been various attempts at providing user specific usage based information. One such attempt is the RADIUS protocol, which is an authentication, authorization and accounting protocol used for communication between a RADIUS server and a dial-in network access server. If a subscriber dials in to a network access server which utilizes the RADIUS protocol for authentication, the service provider is able to track usage of particular subscribers during the dial-in session. Since the user was authenticated by the RADIUS server, the server knows both the identification of the user and the IP address assigned to the user for the dial-up session. Further, since the user is connected to the data network via the network access server, all data traffic for the user must pass through the network access server. Thus, by combining the available data, the service provider can track user specific usage data. While a substantial improvement over prior techniques, the RADIUS protocol can only track user usage for subscribers who dial up to the service provider's system and only during the dial up session. For further information on the RADIUS protocol, see C. Rigney, et al., "Remote Authentication Dial In User Service (RADIUS)", RFC 2138 of the IETF Network Working Group, April 1997; and C. Rigney, "RADIUS Accounting", RFC 2139 of the IETF Network Working Group, April 1997.

Another technique being used is the correlation of data collected at various network locations. Many network nodes currently record usage logs for purposes such as auditing, security, and accounting. For example, Cisco Systems, Inc.'s NetFlow product is a software component that records a usage log for network nodes, such as routers and switches. NetFlow records the flow of data packets between IP addresses and also records the time interval during which the data packets are handled by the node. In a similar manner, network authentication devices, such as Microsoft NT domain servers and RADIUS servers generate authentication logs of users logging on and off the network. These authentication logs contain user ID's, the IP addresses assigned to user ID's during the session, and the time at which the users logged on and off the system. If the data from the usage logs and the authentication logs is collected in a central repository, it is possible to reconstruct a user's usage by correlating the information contained in the logs. However, there are several drawbacks to this technique. First, data collection is complicated because data must be collected from many heterogeneous sources. Second, if the clocks of the two log systems are not synchronized, it may be difficult or impossible to correlate usage with particular users. Third, there is the possibility that multiple usage records for the same network traffic may be collected, which could result in duplicate usage measurements.

A technique for Internet billing is described in R. Edell, N. McKeown, and P. Varaiya, *Billing Users and Pricing for TCP,* IEEE Journal on Selected Areas in Communications, Vol. 13, No. 7, September 1995. The described technique meters user's usage for connection-oriented Internet traffic. Connection-oriented traffic means that prior to any data traffic being transmitted, first a connection between two machines must be set up. In accordance with the described technique, a special billing gateway node is provided which receives all user traffic. When the gateway recognizes a request to establish a connection, the gateway identifies the user associated with the connection so that it may later associate traffic over that connection with the identified user. One problem with this approach is that the establishment of a connection is delayed while the gateway attempts to identify the user. Another problem with this approach is that it only works for connection-oriented communication (e.g. the TCP protocol). The technique will not work for connection-less communication (e.g. UDP protocol).

Thus, there is a need for an improved technique for associating data network usage with particular users.

### Summary of the Invention

The present invention provides for the association of network traffic with particular users in substantially real-time.

In accordance with the invention, a network monitoring node receives authentication data from network authentication sources. The authentication data typically includes an identification of an authenticated user along with the current network address of the user. This authentication data is stored in the monitoring node. Thereafter, upon receipt of a data packet which includes a network address, the monitoring node associates a user with the data packet by comparing the data packet network address with the stored user network addresses. The monitoring node generates user usage data and provides the user usage data to a database. This usage data may be aggregated for a given user.

In accordance with one embodiment of the invention, at least one of the network authentication sources is a network authentication server which authenticates users connecting to the network. The network authentication server generates and transmits authentication data to the monitoring node in immediate response to the authentication of a user. In accordance with another embodiment of the invention, at least one of the network authentication sources is a shared computer having multiple simultaneous users. The shared computer is configured with a socket library comprising computer program code which generates and transmits user authentication data to the monitoring node in immediate response to the initiation of data transfer by a user.

In accordance with one embodiment of the invention, the monitoring node may also determine a service, or a quality of service, associated with received data packets.

Advantageously, the present invention may be used in conjunction with various network applications in order to provide real-time services at the user level, which services previously could not be provided at the user level. For example, the present invention may be used in order to implement user level billing systems, firewalls, gateways, prepaid services, network policy enforcement, and quality of service monitoring.

These and other advantages of the invention will be apparent to those of ordinary skill in the art by reference to the following detailed description and the accompanying drawings.

### Brief Description of the Drawings

Fig. 1 shows components of a data network configured in a manner such that the present invention may be implemented in the network;
Fig. 2 is a functional block diagram of the monitoring node;
Fig. 3 shows the format of a usage data record;
Fig. 4 shows the format of an authentication data record;
Fig. 5 shows the format of a service table record;
Fig. 6 shows the format of a TCP data packet in accordance with the IP protocol;
Fig. 7 is a flowchart showing the steps performed by the monitoring node upon receipt of a data packet;
Fig. 8 is a flowchart showing the steps performed by the monitoring node for identifying a user for a particular data packet; and
Fig. 9 is a flowchart showing the steps performed by the monitoring node for identifying a service for a particular data packet.

### Detailed Description

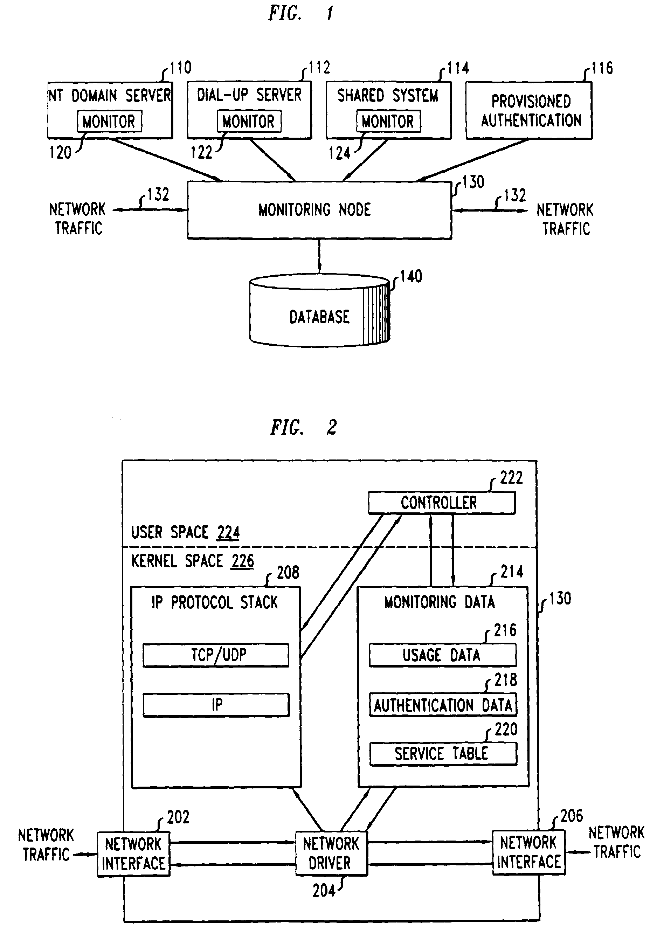

Fig. 1 shows components of a data network configured in a manner such that the present invention may be implemented in the network. In the embodiment shown in Fig. 1, a monitoring node 130 is disposed within a network link 132 such that the monitoring node 130 may monitor network traffic being transported over network link 132. The monitoring node 130, in substantially real-time, associates the monitored network traffic with particular users. This association of network traffic with particular users is performed by reference to authentication data which is stored in the monitoring node 130.

The authentication data is received by the monitoring node 130 from network authentication sources. Four exemplary authentication sources, 110, 112, 114, 116 are shown in Fig. 1. Authentication sources 110, 112, and 114 are used for authenticating users wishing to gain access to a data network or to resources accessible on a data network. NT domain server 110 authenticates users logging on to a Microsoft Windows NT local area network. Dial-up server 112 authenticates users logging in to a dial-up service provider. It is noted that dial-up server 112 may include a RADIUS server as described above in the background. Shared system 114 represents a shared computer system, for example a shared UNIX system, in which multiple users may be logged on at the same time. These systems typically authenticate users by requesting tat users enter a user ID and a password. In order to provide authentication data to the monitoring node 130, the authentication sources 110, 112, 114 further include monitors 120, 122, 124 respectively. These monitors represent software modules which provide the added functionality of transmitting the authentication data to the monitoring node 130 upon the authentication of a user.

With respect to authentication servers 110 and 112, the authentication data is provided to the monitoring node 130 in immediate response to the authentication of a user by one of the authentication servers 110 or 112. Thus, immediately upon authentication of a user, authentication data for that user will be transmitted to the monitoring node 130. It is noted, of course, that there may be a delay in receipt of the information by the monitoring node 130 due to normal processing and transmission delays which result from the design of the authentication servers 110, 112, monitors 120, 122, and communication links with the monitoring node 130. However, any such delay is minor, and the authentication data is intended to be sent to, and received by, the monitoring node immediately following the authentication of a user. With respect to shared system 114, authentication data is sent by monitor 124 to monitoring node 130 in immediate response to the initiation of data transfer by the user. This aspect of shared system 114, as well as further details of monitors 120, 122, 124, will be described in further detail below.

Provisioned authentication node 116 does not authenticate users attempting to access a data network, but instead represents an administrative function that has access to the monitoring node 130. The provisioned authentication node 116 allows for the direct provisioning of authentication data to the monitoring node 130. As will become clear from the following description, direct provisioning of authentication data is useful, for example, when provisioning authentication data for a group of users.

As the monitoring node 130 associates network traffic with particular users, it provides this information to database 140. Database 140 stores the information and may also perform some data processing in order to further correlate the data. Database 140 then provides the data to network applications. Alternatively, the monitoring node 130 may provide the data directly to the network applications. Exemplary network applications will be described in further detail below.

A functional block diagram of monitoring node 130 is shown in Fig. 2. Monitoring node 130 contains two network interfaces 202, 206. The particular type of network interfaces would depend on the type of network to be monitored (e.g., Ethernet). The network interfaces are connected to a network driver 204. When a data packet is received at one of the network interfaces 202, 206, the network driver 204 determines how to handle the data packet. The data packet may fall within one of three general categories. First, the data packet may be a data packet which is addressed to a network node other than monitoring node 130. In this case, the network driver 204 will forward the data packet to the other network interface for delivery to its destination address. The network driver 204 will access the monitoring data 214 in an attempt to associate a particular user and service with the data packet. More particularly, the network driver 204 will access the authentication data 218 and the service table 220 in order to associate a particular user and service with the data packet If successful, the network driver 204 will update the usage data 216 as appropriate. The details of the association of particular users and services with data packets and the updating of the usage data 216 will be discussed in further detail below. A second category of data packets are data packets which are addressed to the monitoring node 130 for use in performing the monitoring functions. As described above, the authentication sources 110, 112, 114, 116 (Fig. 1) send authentication data to the monitoring node 130. This authentication data is sent via the data network and is received by the monitoring node 130 at one of the network interfaces 202, 206. The network driver 204 recognizes the receipt of authentication data from an authentication source and updates the authentication data 218 as appropriate.

It is noted that the monitoring node 130 may host other networking applications, other than the network traffic monitoring application. In such an embodiment, a third category of data packets are data packets which are addressed to the monitoring node 130 but which are associated with such other networking applications. The network driver 204 recognizes these data packets and passes them to the IP protocol stack 208 for processing.

The network node 130 also contains a controller 222 which controls some of the monitoring functions of the monitoring node 130. The controller 222 is in communication with the IP protocol stack 208 which allows for communication with other network elements. One of the functions of the controller 222 is to control the provisioning of the service table 220 and authentication data 218 from an external network node, such as provisioned authentication node 116. The controller 222 also controls the transfer of usage data 216 from the monitoring node 130 to the database 140. It is noted that in the embodiment shown, the controller 222 communicates with the database 140 via the IP protocol stack 208 and through one of the network interfaces 202, 206. In an alternate embodiment, the controller 222 may communicate with the database 140 via a dedicated I/O port (not shown).

It is noted that the monitoring node 130 may be implemented using an appropriately configured and programmed digital computer. Thus, the functions of the monitoring node 130 described herein would be performed under control of a processor(s) executing stored computer program code. Programmed digital computers are well known in the art and as such, the processor(s), memory, and other well known components required to implement the monitoring node 130 using a programmed digital computer are not shown in Fig. 2. One skilled in the art could readily implement the monitoring node given the description herein. The network interfaces 202, 206 represent hardware devices which would be part of the computer. The network driver 204, IP protocol stack 208, and controller 222 represent software modules used to implement the functions described herein.

As shown in Fig. 2, the IP protocol stack 208, network driver 204, and monitoring data 214 are located in memory within the computer operating system kernel space 226. The kernel space 226 represent the portion of the computer memory which is accessible only by the operating system kernel. The controller 222 is located in memory within the user space 224. User space 224 represents the portion of the computer memory which is accessible by user software modules. In general, processing which occurs in the kernel space 226 is faster than processing which occurs in the user space 224. The architecture shown in Fig. 2 is advantageous because most of the data packet processing occurs in the kernel space 226. Further, the architecture avoids the additional costs of moving data packets from kernel space 226 into user space. The controller 222 is appropriately located in user space 224 because it does not perform time critical operations. This advantageous design of the monitoring node functionality supports the substantially real-time association of received data packets with particular users. In alternate embodiments, some or all data packet processing functions may be performed in the user space 224. While this introduces additional overhead, it simplifies software development and management.

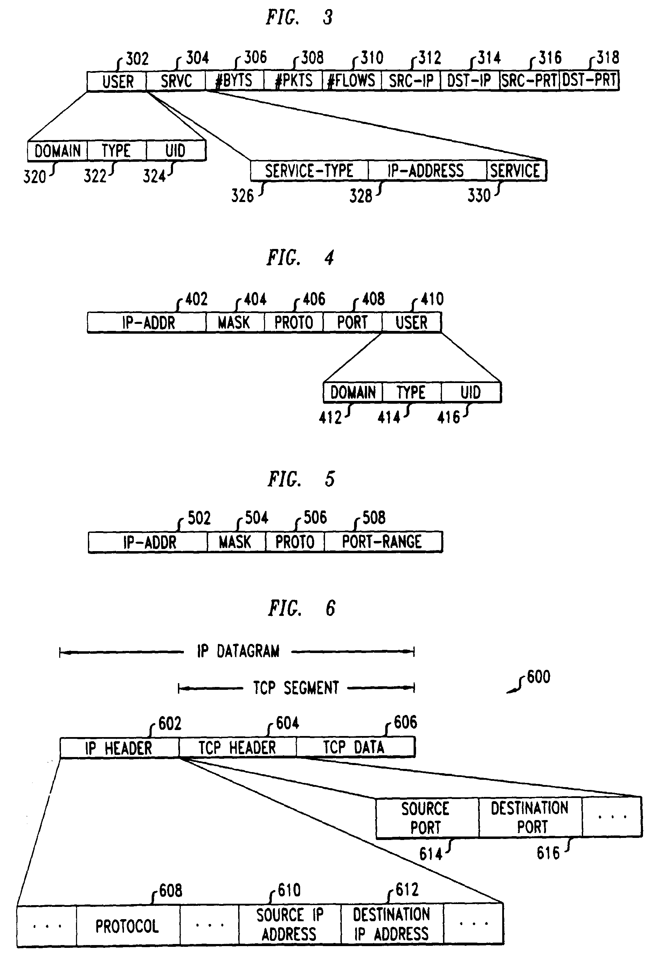

The monitoring data 214 is described in further detail in Figs. 3-5. Fig. 3 shows the format of the stored usage data 216, which contains the monitoring information compiled by the monitoring node 130 during operation. Usage data 216 contains records of the form shown in Fig. 3. The user field 302 identifies a particular user that was associated with a data packet and srvc field 304 identifies a service used by the particular user. The remainder of the data in the record is aggregated based on the user field 302 and the service field 304. Thus, for a particular user using a particular service, there will be one record and the remainder of the fields will be aggregated as monitoring continues. The #byts field 306 contains the number of bytes that were transferred. The #pkts field 308 contains the number of packets that were transferred. The #flows field 310 contains the number of flows. The src-IP field 312 contains the source IP address of the data packets. The dst-IP field 314 contains the destination IP address of the data packets. The src-prt field 316 contains the source port of the data packets. The dst-prt field 318 contains the destination port of the data packets. These last four fields 312, 314, 316, 318 are optional and they may or may not be maintained for different users, services, or hosts. Performance is improved if these fields are not maintained. However, there are instances in which it is beneficial to maintain more detailed information, for example in order to closely audit a particular user's usage.

In many computing environments multiple authentication domains co-exist. For example, a single local area network may support both NT domain authentication and UNIX domain authentication. Further, remote access authentication may be used for dial-up connections. This creates the problem that a single user may have multiple user names across the authentication domains. Correspondingly, the same user name may be assigned to different users across the authentication domains. In order to deal with this problem, the user field 302 of the usage data records is further divided into three fields. A domain field 320 identifies the authentication domain. If the authentication domain is not explicitly known, then one technique for assigning a domain name is to use the IP address of the system performing the authentication (e.g. the IP address of the NT domain server), or a proxy for the machine performing the authentication. The type field 322 is the type of authentication that was performed. For example, the type could typically be identified as "UNIX", "NT", or "RADIUS", depending on the type of authentication server. The uid field 324 is the user identifier for the particular domain. It is noted that the use of the domain field 320, type field 322, and uid field 324 to identify a user also allows for the auditing of usage data. Such auditing includes the determination, after an event, of how the monitor associated usage with a particular user.

In addition to associating network usage with particular users, the monitor node 130 is also able to identify the service that is being used by the user. The srvc field 304 is further divided into three fields. The service-type field 326 identifies the type of the service. In one embodiment, the service-type field 326 may contain ETHER, IP, TCP, or UDP. The IP-addr field 328 contains an IP address. The service field 330 contains a context sensitive code identifying a particular service within the class of services defined by the service-type field 326. In one embodiment, if the service-type field 326 is ETHER, then the service field 330 contains the Ethernet protocol number. If the service-type field 326 is IP, then the service field 330 contains the standard IP protocol number (e.g. 1 for IP/ICMP, 6 for IP/TCP, and 17 for IP/UDP). If the service-type field 326 is TCP or UDP, then the service field 330 contains the port number of the service (e.g. in the case of HTTP, the service-type field 326 would contain TCP and the service field 330 would contain 80, which is the standard port for HTTP servers).

Fig. 4 shows the format of the stored authentication data 218 records. The data in these records is received from the authentication sources and is used to associate the monitored network traffic with particular users. The authentication data 218 contains records which associate particular users with IP-addresses, protocols, and ports. The fields will be described generally here, however the use of these fields to associate network traffic with particular users will be described in further detail below. The IP-addr field 402 contains an IP address, the mask field 404 contains a 32 bit number used as a mask, the proto field 406 contains an IP protocol number (e.g. UDP(17) or TCP(6)), the port field 408 contains an identification of a port, and the user field 410 identifies a particular user. The user field 410 is further divided into a domain field 412, type field 414, and uid field 416. Fields 412, 414, and 416 are the same as fields 320, 322, and 324 described above in conjunction with Fig. 3.

Fig. 5 shows the format of records in the service table 220, which is used to identify a service associated with the usage of particular users. The fields will be generally described here, however the use of these fields to associate network traffic with particular services will be described in further detail below, at which point the use of these fields will become clear. The IP-addr field 502, mask field 504, and proto field 506 are the same as fields 402, 404, and 406 described above in conjunction with Fig. 4. The port-range field 508 contains a range of port identifications.

Fig. 6 shows the format of a TCP data packet in accordance with the IP protocol. The IP protocol is well known and only the fields which are relevant to the present invention will be described. The data packet 600 contains an IP header 602, a TCP header 604 and TCP data 606. The IP header 602 is made up of several fields, including protocol 608, source IP address 610 and destination IP address 612. The TCP header 604 is also made up of several fields, including source port 614 and destination port 616. It is noted that a TCP data packet is described in Fig. 6 as an example of a data packet which may be processed in accordance with the present invention. However, the present invention is not limited to processing TCP packets. One skilled in the art would recognize that the present invention may process data packets transmitted in accordance with other protocols. For example, and without limitation, such other protocols may be Ethernet, IP, UDP, RPC, NFS, SMPT, etc.

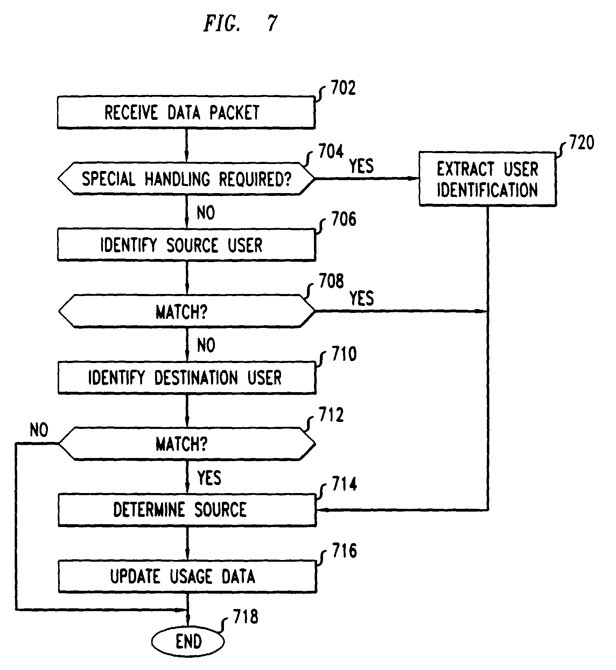

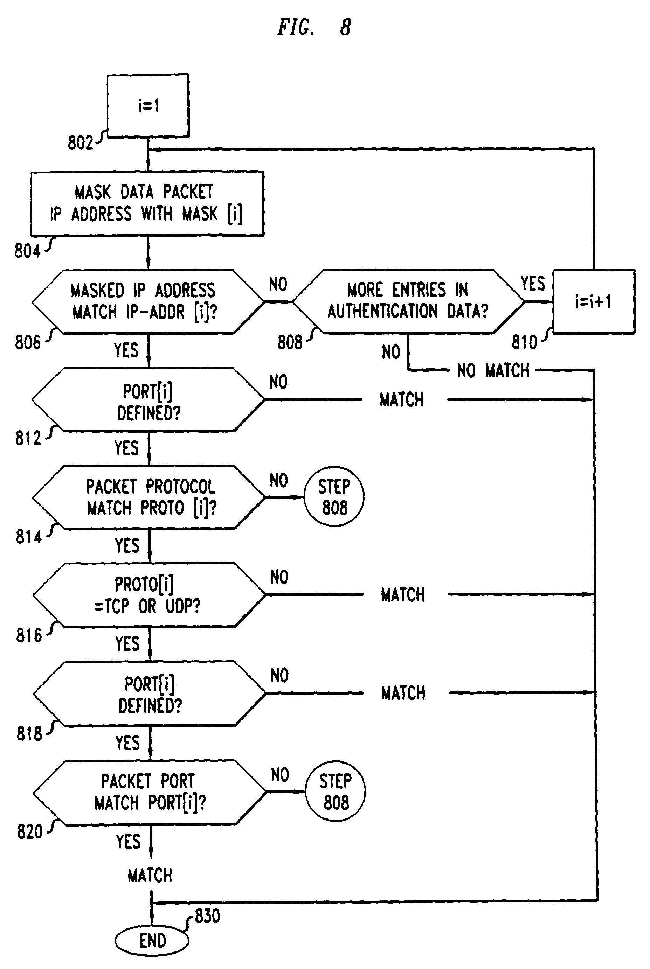

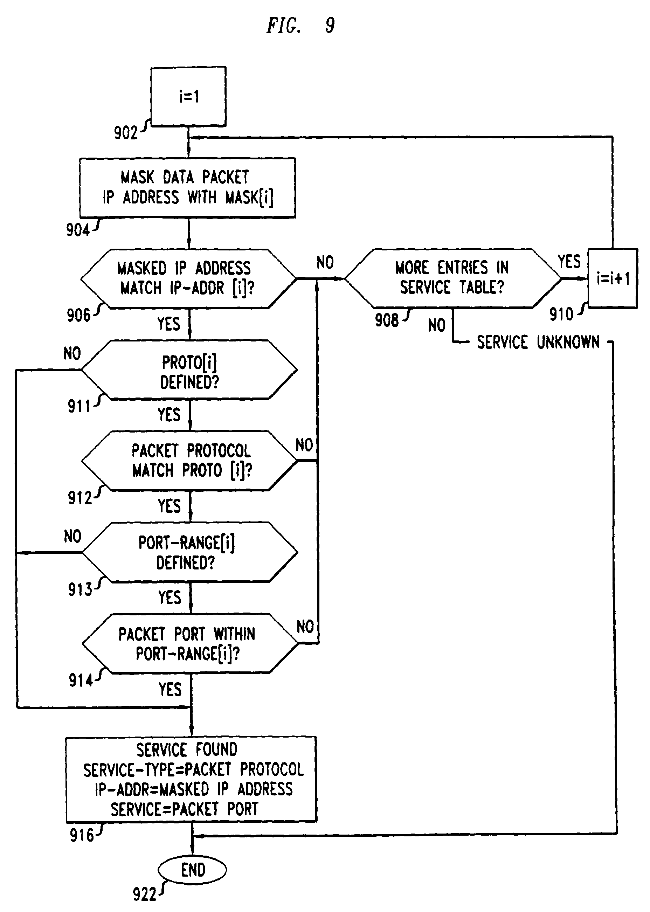

The operation of the monitor node 130 in accordance with the present invention will be described in conjunction with the flowcharts of Figs. 7-9. The steps shown in the flowcharts are performed by a processor of the monitoring node 130 in accordance with stored computer program code. Fig. 7 shows the steps performed by the monitoring node 130 upon receipt of a data packet. In step 702 a data packet is received by the monitoring node 130. It is assumed that this packet is a data packet which is addressed to a network node other than monitoring node 130, and as such, the monitoring node 130 will attempt to associate a particular user and service with the data packet. In step 704 the monitor node 130 determines whether the received data packet is a data packet transporting data in accordance with some known protocol for which special processing is required. The special processing of data packets will be described below. If the data packet is not transporting data in a protocol which requires special processing, then control is passed to step 706 in which an attempt is made to identify the user who is the source of the data packet. This step 706 of identifying a user includes further steps which are described further below in conjunction with the flowchart of Fig. 8. In step 708 it is determined whether a user was identified in step 706. If a user was not identified, then in step 710 an attempt is made to identify the user to whom the data packet is addressed. This step 710 is the same as step 706 and will be described further below in conjunction with the flowchart of Fig. 8. In step 712 it is determined whether a user was identified in step 710. If a user was identified in either step 708 or 712, then in step 714 an attempt is made to identify the service associated with the data packet. If no user was identified in step 712, then the method ends in step 718. Step 714 of identifying a service includes further steps which are described further below in conjunction with the flowchart of Fig. 9. In step 716 the usage data 216 (Fig. 2) is updated in accordance with the user identified in step 706 or 710, and the service (if identified in step 714).

Returning now to step 704, in that step it is determined whether the received data packet requires special processing. Some protocols transmit data in such a way that the user sending the data is not the user that requested that the data be sent. For example, Network File System (NFS) protocol requests on Unix systems are usually initiated by a process owned by the system administrator and not by the user requesting the data. Similarly, e-mail is often forwarded by a process that is owned by a mailer daemon and not by the user sending the mail. Another example is a web server which offers a web hosting service. The web server delivers the data, but the user that should be considered for accounting purposes is the user whose content is being delivered. In these, and other special cases, application-specific techniques must be used to identify the user originating or receiving data over the network. Most commonly, these techniques involve examining not just packet headers, but also the contents of the packets. Thus, if the test in step 704 is yes then in step 720 a special processing algorithm is applied to the data packet to determine the user identification. Each non-standard protocol would have a special processing algorithm associated with it. One skilled in the art of data communication could readily implement such algorithms for a desired protocol.

With reference to Fig. 3, the records in the usage data 216 are updated to reflect the new user identification and service identification (if any). If a usage data record containing the identified user and service pair already exists, then the #byts field 306, #pkts field 308 and the #flows field 310 are updated to reflect the new data packet. If a usage data record containing the identified user and service pair does not already exist, then a new record is created which contains the appropriate information. Updating the user data 216 in this manner results in a single record for each unique user/service pair.

Fig. 8 shows further detail of the steps 706, 710 for identifying a user for a particular data packet. When the steps of Fig. 8 are performed as a result of step 706, the IP address used is the source IP address 610 (Fig. 6) of the received data packet. When the steps of Fig. 8 are performed as a result of step 710, the IP address used is the destination IP address 612 of the received data packet. In step 802 an index (i) to the authentication data records 218 is set to 1. As used in the description of Fig. 8, the term *field-name*[i] represents the value in the field *field-name* in the i^{th} record in the authentication data 218. In step 804 the IP address of the data packet is masked with mask [i]. Applying a mask prior to comparing two values is a well known technique. The mask is advantageously used here in order to match a range of data packet IP addresses to the IP-addr (field 402) of a single authentication data record. This is useful, for example, in a billing application in order to identify users of particular sub-networks.

In step 806 the masked data packet IP address is compared with IP-addr[i]. If there is no match, then in step 808 it is determined whether there are additional records in the authentication data 218. If there are no more records, then there is no match and the method ends in step 830. If there are more records, then in step 810 index i is incremented by one and control is returned to step 804. When a masked data packet IP address matches IP-addr[i], the test in step 806 is YES and in step 812 it is determined whether proto[i] is defined. That is, step 812 determines whether the proto field 406 in the i^{th} authentication record contains a value. If not, then there is a match and the method ends in step 830. If the test in step 812 is YES, then in step 814 it is determined whether the protocol of the received data packet (field 608) matches proto[i]. If the test in step 814 is NO, then the i^{th} authentication record does not match the received data packet and control passes to step 808. If the test in step 814 is YES then in step 816 it is determined whether proto[i] = TCP or UDP. If the test in step 816 is NO, then there is a match and the method ends in step 830. If the test in step 816 is YES, then in step 818 it is determined whether port[i] is defined. If not, then there is a match and the method ends in step 830. If the test in step 818 is YES, then in step 820 it is determined whether the port of the received data packet (source port field 614 if the steps of Fig. 8 are being performed from step 706 of Fig. 7, and destination port field 616 if the steps of Fig. 8 are being performed from step 710 of Fig. 7) matches port[i]. If the test in step 820 is NO, then the i^{th} authentication record does not match the received data packet and control passes to step 808. If the test in step 820 is YES then there is a match and the method ends in step 830.

Fig. 9 shows further detail of step 714 (Fig. 7) for identifying a service for a particular data packet. The steps of Fig. 9 are first performed using the source IP address field 610 and the source port field 614 of the received data packet 600 in order to associate a service with the received data packet. If the service cannot be found using the source IP address field 610 and the source port field 614, then the steps of Fig. 9 are repeated using the destination IP address field 612 and the destination port field 616 of the received data packet in order to associate a service with the received data packet.

In step 902 an index (i) to the service table 220 is set to 1. As used in conjunction with the description of Fig. 9, the term *field-name*[i] represents the value in the field *field-name* in the i^{th} record in the service table 220. In step 904 the IP address of the data packet is masked with mask [i]. In step 906 the masked data packet IP address is compared with IP-addr[i]. If there is no match, then in step 908 it is determined whether there are additional records in the service table 220. If there are no more records, then the service is unknown and the method ends in step 922. If there are more records, the in step 910 index i is incremented by one and control is returned to step 904. When a masked data packet IP address matches IP-address[i], the test in step 906 is YES and in step 911 it is determined whether proto[i] is defined. That is, step 911 determines whether the proto field 506 in the i^{th} service table record contains a value. If not, then there is a match and control passes to step 916. If the test in step 911 is YES, then in step 912 it is determined whether the protocol of the received data packet (field 608) matches proto[i]. If the test in step 912 is NO, then the i^{th} service table record does not match the received data packet and control passes to step 908. If the test in step 912 is YES, then in step 913 it is determined whether port-range[i] is defined. That is, step 913 determines whether the port-range field 508 in the i^{th} service table record contains a value. If not, there is a match and control passes to step 916. If the test in step 913 is YES, then in step 914 it is determined whether the port of the received data packet is within the range defined by port-range[i]. If the test in step 914 is NO, then the i^{th} service table record does not match the received data packet and control passes to step 908. If the test in step 914 is YES, then the service has been identified, as represented by step 916. As such, when the usage data 216 is updated in step 716, service-type field 326 is assigned the value in the protocol (field 608) of the received data packet, the IP-addr field 328 is assigned the value of the masked data packet IP address (as determined in step 904), and the service field 330 is assigned the value of the port of the data packet. The method ends in step 922.

We now turn to a more detailed description of the implementation of monitors 120, 122, and 124.

In one embodiment monitors 120 and 122 monitor the authentication logs of the authentication servers 110 and 112 respectively. When new authentication data is generated to an authentication log, the associated monitor immediately forwards the information to the monitoring node 130.

In another embodiment of monitor 120 for NT domain server 110, the monitor 120 is implemented as an NT service that is registered to receive automatic notification of the performance of network-critical operations (e.g. logging on and logging off). Immediately upon receipt of such notification, the monitor 120 sends the appropriate authentication data to the monitoring node 130.

With respect to the dial-up server 112, some dial-up servers provide notification mechanisms, similar to that described above in connection with the NT domain server 110, which may be used for implementing an authentication monitor 122. In addition, where the dial-up server 112 is implemented as a RADIUS server, the monitor 122 can be implemented as a proxy RADIUS server between the RADIUS client and the actual RADIUS server. In this implementation, the proxy forwards all RADIUS requests and responses between the client and the RADIUS server. In addition, as a side-effect, the proxy generates and transmits the authentication data to the monitor node 130 in immediate response to authentication of a user.

One advantageous embodiment of monitor 124 for the shared computer system 114 will now be described. The embodiment utilizes the shared-object architecture and dynamic linking capabilities of UNIX operating systems. Shared libraries are dynamically linked by the operating system automatically with standard networking applications such as world-wide-web servers and browsers, and ftp servers and clients. In accordance with this embodiment, the existing shared socket library (typically called libsocket.so) is replaced with a new socket library. The new library contains all of the same operations as the original socket library, with additional wrapper code inserted around at least some of the networking operations. In an advantageous embodiment, the functions that are wrapped with additional code include bind, connect, sendmsg, sendto, recvfrom, and recvmsg. When these functions are executed, the added wrapper code generates an authentication message which will transmit authentication data to the monitoring node 130. The authentication information will typically include the IP address of the shared computer system 114, the TCP and UDP ports on which the particular user's processes are communicating, and identification of the user. Thus, in this situation, the authentication data is transmitted in immediate response to the initiation of data transfer by the user.

The above description of monitors 120, 122, 124 is directed to how the monitors generate the authentication data. Once generated, the authentication data is transmitted to monitoring node 130. Although in Fig. 1 monitoring node 130 is shown connected to authentication sources 110, 112, 114, 116, it is to be understood that this is a logical connection, and in fact, authentication data sent from authentication sources 110, 112, 114, 116 to monitoring node 130 may be required to traverse one or more subnetworks. In addition, the authentication data may be sent to multiple monitoring nodes in multiple subnetworks of the data network. We describe two methods for transmitting authentication data to the monitoring node(s).

Authentication servers 110 and 112 use a method called broadcast authentication which sends the authentication data in special additional messages from the authentication server to the monitoring node(s). These messages are sent to broadcast addresses in the sub-networks in which monitoring nodes may be located. These special additional messages may then be received and processed by the monitoring node(s). The broadcast addresses of the subnetworks in which monitoring nodes may be located are provisioned in the authentication servers 110, 112.

Authentication source 114, which is a shared computer system, uses one of two techniques for transmitting the authentication data to monitoring nodes. As described above, the monitor 124 of the shared computer system 114 transmits the authentication data upon initiation of data transfer by a user of the shared system 114. If the user is initiating a connection-oriented transmission, then the broadcast authentication technique described above is used. When broadcast authentication is used by authentication source 114, the broadcast address is a broadcast address in the subnetwork of the machine being connected to. By transmitting to that subnetwork, any intervening monitoring nodes will be able to receive the special message containing the authentication data. If the user is initiating a connection-less transmission, then the shared system 114 uses another method, called tagged authentication. In accordance with this method, every out-going message is tagged with the additional authentication data. One technique for tagging the outgoing messages is to insert the authentication data into an options field of the IP packet header. This technique will work only for outgoing messages (because incoming messages cannot be tagged). It is noted that for outgoing messages in a connection-less transmission, broadcast authentication as described above may also be used. The decision whether to use tagged or broadcast authentication for outgoing data packets will depend upon the expected number packets to be sent. For incoming packets in a connection-less transmission, broadcast authentication must be used. However, a monitoring node must receive the broadcast of authentication data prior to receiving a data packet in order to be able to accurately process the data packet. One technique for handling this timing issue is to have the monitoring node buffer incoming packets in a connection-less transmission until the monitoring node receives the broadcast authentication data.

The techniques described above for determining user and service information for data packets may be used when complete IP and, if relevant, TCP or UDP headers are available. However, some networks fragment large messages into multiple smaller packets. The header information necessary to determine the user and service as described above is available only in the first of the fragmented packets. In order to handle this situation, the user and service information which is determined from the first packet can be stored in the monitoring node 130. When a later fragment of the same message is subsequently received at the monitoring node 130, the stored user and service information is applied to the fragment. Fragmentation information stored in IP headers allows the monitoring node 130 to associate packet fragments with the appropriate user and service information from previously received headers.

As seen from the above description, the monitoring node 130 allows for the association of particular users with network traffic. There are many network applications which could be used in conjunction with this technique. A billing application can use the network usage information stored in database 140 to bill particular users based on that particular user's network usage, including factors such as amount of network traffic, time of day, and the particular services used. A quality of service (QOS) network application may also be implemented. The use of the monitoring node 130 allows for the measuring of the quality of service that is received by particular users. The QOS network application may be used to reimburse users when the QOS falls below a predetermined amount, or may take corrective action in the network to restore the predetermined level of QOS. As an example, two monitoring nodes at both ends of an IP telephony call may be used to measure the end-to-end service quality received by the call. This may be measured, for example, in terms of average or maximum latency. This information can form the basis of a variety of pricing plans. A firewall application may be used to restrict network traffic based on particular source or destination users. Current firewalls typically restrict traffic based on the IP address of the source or destination. As described above, however, the IP address generally does not identify a particular user. The use of a network monitor as described above allows a firewall application to restrict network traffic based on particular users. A billing application, quality of service application, and firewall application may be implemented using dedicated network nodes. Alternatively, the functions of a billing application, quality of service application, and firewall application may be incorporated into network nodes which are also used for other purposes, such as switches and routers.

One skilled in the art would readily understand that there are many additional applications which could be implemented using the data associating network traffic with particular users. For example, a gateway system may use the information generated by the monitoring node to restrict the traffic of a specific user or class of users, to a specific user or a class of users. Prepaid services may be provided because the network monitor may monitor particular users usage in substantially real-time as the usage occurs. Further, the data generated by the monitoring node may be used to enforce some network policy based on factors such as time, duration, or specific services.

In certain network topologies, there may be multiple monitoring nodes. As a result, there may be certain paths which, if traversed by a data packet, would result in the data packet being processed by multiple monitoring nodes. This may present a problem for certain network applications. For example, in a billing application, it may be incorrect to process the same data packet in multiple monitoring nodes, because it may result in double billing. This multiple processing problem, and a technique for solving it, are described in copending United States patent application serial no. 09/316118.

The foregoing Detailed Description is to be understood as being in every respect illustrative and exemplary, but not restrictive, and the scope of the invention disclosed herein is not to be determined from the Detailed Description, but rather from the claims. It is to be understood that the embodiments shown and described herein are only illustrative of the principles of the present invention and that various modifications may be implemented by those skilled in the art without departing from the scope of the invention. For example, as described in the particular embodiment shown in Fig. 1, the monitoring node 130 is shown as a stand-alone network node acting as a bridge on a network link. However, it is to be understood that the functions of the monitoring node 130 in accordance with the invention may also be implemented as a module within an existing network node, such as a switch or a router. Further, in one embodiment, the invention is implemented using an appropriately programmed general purpose computer. Alternatively, the invention may be implemented using programmable hardware logic or special purpose hardware components.

## Claims

1. A method for operation of a network node comprising the steps of:
receiving data associating users with network addresses from at least one network authentication source, said data being received in immediate response to the authentication of users;
receiving a data packet comprising a network address; and
determining in substantially real-time a user associated with said data packet by comparing said network address with said data associating users with network addresses.

2. The method of claim 1 further comprising the step of:
determining in substantially real-time a service associated with said data packet.

3. The method of claim 1 further comprising the step of:
storing aggregate user usage data in a database.

4. The method of claim 1 wherein said at least one authentication source includes an authentication server.

5. The method of claim 1 wherein said at least one authentication source includes a provisioned authentication node.

6. A network node comprising:
at least one network interface for:
receiving user authentication data from at least one network authentication source, said user authentication data being received in immediate response to authentication of a user; and
receiving network traffic;
a memory for storing said received user authentication data; and
a processor operating in accordance with stored program code for comparing, in substantially real-time, said network traffic with said stored user authentication data to associate portions of said network traffic with particular users.

7. The network node of claim 6, said processor further operating in accordance with stored program code for determining, in substantially real-time, a service associated with portions of said network traffic.

8. Apparatus for generating network usage data comprising:
mean for receiving user authentication data from at least one network authentication source, said user authentication data being received in immediate response to authentication of a user;
means for monitoring network traffic; and
means for associating, in substantially real-time, portions of said network traffic with particular users by comparing said network traffic with said user authentication data.

9. The apparatus of claim 8 further comprising:
means for associating, in substantially real-time, portions of said network traffic with particular services.

10. The apparatus of claim 8 further comprising:
means for storing aggregate usage data in a database.

11. A communication network in which users transmit and receive data across said network, said network comprising:
1) at least one network authentication source for transmitting user authentication data in immediate response to user authentication; and
2) a network node comprising:
a) at least one network interface for:
receiving said user authentication data from said at least one network authentication source; and
receiving data network traffic;
b) a memory for storing said received user authentication data; and
c) a processor generating user usage data by comparing, in substantially real-time, said network traffic with said stored user authentication data to associate portions of said network traffic with particular users.

12. The communication network of claim 11 further comprising:
a database for storing aggregate user usage data.

13. The communication network of claim 11 further comprising:
a billing application for receiving said user usage data and for billing users based at least in part on usage.

14. The communication network of claim 11 further comprising:
a quality of service application for receiving said user usage data and for providing quality of service to users based at least in part on said user usage data.

15. The communication network of claim 11 further comprising:
a firewall for receiving said user usage data and for restricting network traffic based at least in part on said user usage data.
